# FASCICULE DE BREVET EUROPEEN

(11) **EP 2 932 730 B1**
(45) Date de publication et mention de la délivrance du brevet: **21.09.2016**
(21) Numéro de dépôt: 13791819.9
(22) Date de dépôt: 15.11.2013
(51) Int. Cl.: H04R 1/28, H04M 1/03, H04R 1/22

(54) **DISPOSITIF ELECTRONIQUE COMPORTANT UN BOITIER VENTILE RECEVANT AU MOINS UN HAUT-PARLEUR**
ELEKTRONISCHE VORRICHTUNG MIT EINEM BELÜFTETEN GEHÄUSE ZUR AUFNAHME MINDESTENS EINES LAUTSPRECHERS
ELECTRONIC DEVICE COMPRISING A VENTILATED HOUSING RECEIVING AT LEAST ONE LOUDSPEAKER

(30) Priorité: 17.12.2012 FR 1262158
(43) Date de publication de la demande: 21.10.2015
(73) Titulaire: Sagemcom Broadband SAS, 92500 Rueil-Malmaison (FR)
(72) Inventeur: BOURGOIN, Gilles, F-92500 Rueil Malmaison (FR)
(74) Mandataire: Lavialle, Bruno François Stéphane
(86) Numéro de dépôt international: PCT/EP2013/073979
(87) Numéro de publication internationale: WO 2014/095185

(56) Documents cités:
- CN-U- 202 334 626
- US-A- 5 917 923
- US-A1- 2009 169 040
- US-A1- 2009 169 041
- US-A1- 2010 046 784
- US-A1- 2010 067 714

## Description

La présente invention concerne un dispositif électronique comportant un boîtier ventilé et un haut-parleur associé au boîtier.

Il existe des dispositifs, notamment des dispositifs audio, comportant un boîtier qui définit un volume interne contenant des composants électroniques dont un haut-parleur monté en regard d'une ouverture de diffusion sonore ménagée dans une paroi du boîtier. Certains de ces composants électroniques chauffent, comme un microprocesseur ou un transformateur, de sorte que le boîtier est généralement pourvu d'au moins deux ouvertures d'aération en deux portions du boîtier écartées l'une de l'autre pour permettre une circulation d'air dans le volume interne entre ces deux ouvertures. Lorsque la chaleur à dissiper est importante, un ventilateur est en outre monté dans le volume interne du boîtier en regard de l'une des ouvertures d'aération pour forcer la circulation de l'air entre les deux ouvertures.

Le document US 2009/169041 A1 divulgue un dispositif électronique portable qui comprend un haut-parleur avec un résonateur de Helmholtz en utilisant un volume interne et une ouverture de diffusion sonore ménagée dans le boîtier du dispositif. Le document CN 202 334 626 U décrit un dispositif électronique portable avec deux ouvertures qui sont utilisées pour la diffusion sonore et en même temps pour la dissipation de la chaleur, c'est à dire comme ouvertures d'aération. Les documents US 5 917 923 A, US 2010/067714 A1, et US 2010/046784 A1 décrivent des haut-parleurs avec un résonateur de Helmholtz et en plus un canal en chicane. Le document US 2009/169040 Al décrit un résonateur de Helmholtz ayant une fréquence de résonance située hors de la plage de fréquences utile du haut-parleur quand l'ouverture du dispositif n'est pas fermée. Quand cette ouverture est fermée, la fréquence de résonance est située aussi dans la plage de fréquences utile pour amplifier cette fréquence. Ainsi, ce document décrit un dispositif électronique portable comprenant un haut-parleur avec un résonateur de Helmholtz qui est seulement actif dans la plage de fréquences utile quand le dispositif est connecté avec une structure acoustique externe comme un canal en chicane.

La qualité de restitution sonore de tels dispositifs est médiocre du fait de la présence des ouvertures d'aération qui provoquent des déperditions sonores à cause des courts-circuits acoustiques. Ces dispositifs présentent une forte sur-amplification des fréquences basses-médium et une forte atténuation des basses fréquences.

Pour améliorer la qualité de restitution sonore, il est connu d'aménager, dans le volume interne du boîtier, une enceinte close autour du haut-parleur. Ceci améliore les performances acoustiques du dispositif mais augmente notablement l'encombrement du boîtier au point que ses dimensions soient incompatibles avec certaines applications notamment pour des dispositifs portables.

Un but de l'invention est de fournir un moyen pour améliorer les performances acoustiques de tels dispositifs sans augmenter son encombrement.

L'invention est née de la constatation que dans la plupart des dispositifs électroniques, une partie seulement du volume interne du boîtier est occupée, la partie restante contenant seulement de l'air. Par l'invention, on cherche à utiliser l'air contenu dans le boîtier comme une charge pour le haut-parleur sans encombrer le volume interne du boîtier.

A cet effet, on prévoit, selon l'invention, un dispositif électronique comprenant un boîtier qui définit un volume interne dont une partie seulement est occupée par des composants électroniques et qui est pourvu d'au moins deux ouvertures d'aération en deux portions du boîtier écartées l'une de l'autre pour permettre une circulation d'air dans le volume interne entre ces deux ouvertures, les composants électroniques comportant au moins un haut-parleur qui a une plage de fréquences utile et qui est monté dans le volume interne en regard d'au moins une ouverture de diffusion ménagée dans le boîtier, caractérisé en ce que chaque ouverture d'aération est reliée au volume interne par un canal en chicane ayant une longueur adaptée pour former un résonateur de Helmholtz ayant une fréquence de résonance située hors de la plage de fréquences utile du haut-parleur.

Ainsi, les chicanes permettent de rendre les ouvertures acoustiquement inexistantes de sorte que le boîtier se comporte comme une enceinte close tout en conservant des ouvertures d'aération. Comme la fréquence de résonance du résonateur de Helmholtz ainsi formé est hors de la plage de fréquences utiles du haut-parleur, il n'engendre pas de dégradations des performances acoustiques du haut-parleur.

Avantageusement, le dispositif dans lequel le haut parleur est relié à un organe de filtrage agencé pour atténuer un pic de puissance acoustique à la fréquence de résonance.

Le filtre permet de supprimer la fréquence de résonance du résonateur et réduire la vitesse de l'air dans les ouvertures d'aérations.

D'autres caractéristiques et avantages de l'invention ressortiront à la lecture de la description qui suit d'un mode de réalisation particulier non limitatif de l'invention.

Il sera fait référence aux dessins annexés, parmi lesquels :

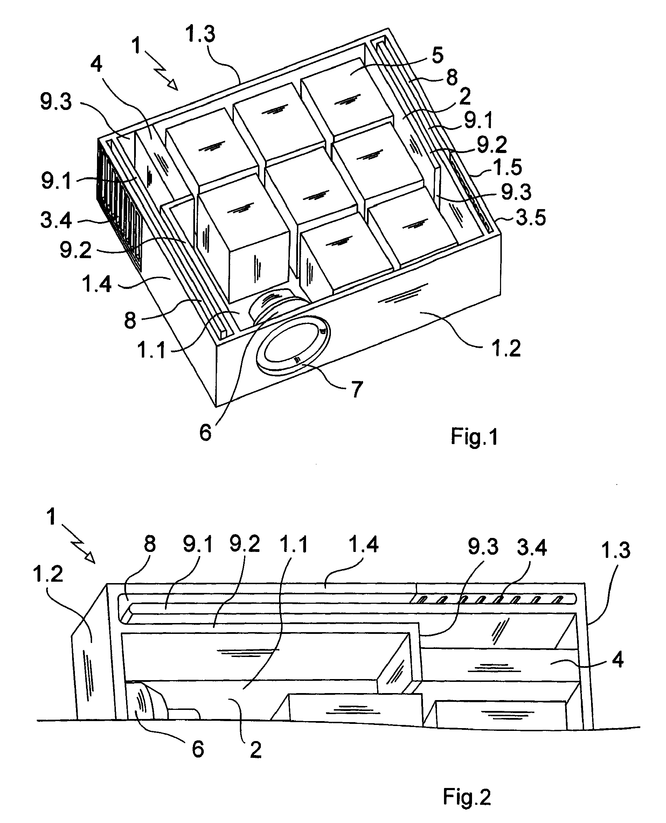

- la figure 1 est une vue en perspective, avec écorché, d'un dispositif conforme à l'invention ;
- la figure 2 est une vue partielle agrandie du dispositif après une rotation de 90° du dispositif par rapport à la figure 1 ;
- la figure 3 est un graphe montrant le niveau de pression acoustique du dispositif en fonction de la fréquence et en comparaison avec la courbe correspondante d'une enceinte close.

En référence aux figures, le dispositif électronique de l'invention comprend un boîtier 1, ici de forme parallélépipédique, comportant un fond 1.1 à partir duquel s'élèvent quatre parois verticales planes, à savoir une paroi frontale 1.2, une paroi arrière 1.3 et deux parois latérales 1.4 et 1.5. Le boîtier comprend en outre une paroi supérieure non représentée ici.

Le boîtier 1 définit ainsi un volume interne 2.

Les parois latérales 1.4 et 1.5 sont opposées l'une à l'autre et pourvues chacune d'une ouverture d'aération 3.4 et 3.5 (ici sous la forme d'une pluralité d'ouïes) ménagée dans la paroi latérale 1.4, 1.5 ici au voisinage de la paroi arrière 1.3. Les deux ouvertures d'aération 3.4, 3.5 sont ainsi réalisées en deux portions du boîtier 1 écartées l'une de l'autre pour permettre une circulation d'air dans le volume interne 2 entre ces deux ouvertures d'aération 3.4, 3.5. Un ventilateur 4 est monté au voisinage de l'ouverture d'aération 3.4 pour forcer la circulation de l'air dans le volume interne 2 d'une ouverture d'aération à l'autre.

Le boîtier 1 contient des composants électroniques 5 (symbolisés par des cubes) par exemple montés sur une ou plusieurs cartes à circuit imprimé. Ces composants électroniques comprennent des composants actifs et/ou passifs, des circuits intégrés, un ou des transformateurs, des convertisseurs, des composants optiques... et au moins un haut-parleur 6 qui a une plage de fréquences utile prédéterminée et qui est monté dans le volume interne 2 en regard d'une ouverture de diffusion sonore 7 ménagée dans la paroi frontale 1.2.

Le contenu du boîtier 1, c'est-à-dire essentiellement les composants électroniques 5, n'occupe qu'une partie seulement du volume interne 2.

Chaque ouverture d'aération 3.4, 3.5 est reliée au volume interne 2 par un canal en chicane 8. Chaque canal en chicane 8 a une forme en U et est délimité par deux parois parallèles 9.1, 9.2. La première paroi 9.1 s'étend en regard de la paroi 1.4, 1.5 et parallèlement à celle-ci. La paroi 9.1 a une extrémité en contact avec la paroi arrière 1.3 et une extrémité s'étendant à distance de la paroi frontale 1.2 pour délimiter un passage d'air. La deuxième paroi 9.2 s'étend en regard de la première paroi 9.1 et parallèlement à celle-ci. La paroi 9.2 a une extrémité en contact avec la paroi frontale 1.2 et a une extrémité s'étendant à distance de la paroi arrière 1.3 en délimitant une ouverture 9.3 en communication avec le volume interne 2. Le ventilateur 4 est monté dans l'ouverture 9.3 s'étendant au voisinage de la paroi latérale 1.4.

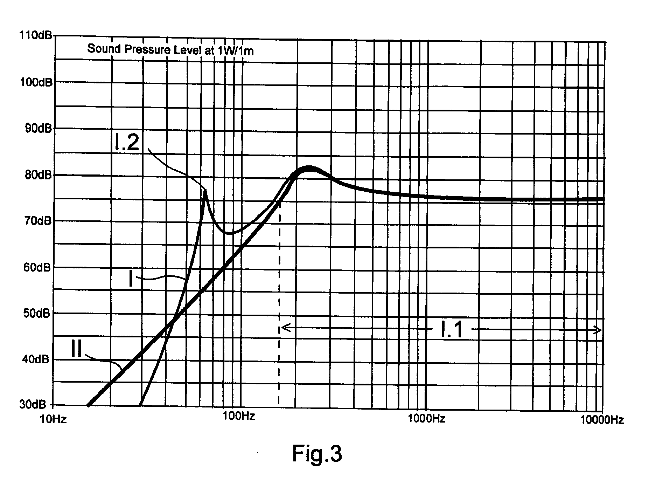

Le canal en chicane 8 a une longueur adaptée pour former un résonateur de Helmholtz ayant une fréquence de résonance située hors de la plage de fréquences utile du haut-parleur 4. Par exemple, comme représenté sur la figure 3, si le haut-parleur 4 a une réponse en fréquence I avec une zone I.1 correspondant aux fréquences utile s'étendant environ entre 110 Hz et 10000 Hz sous forme d'un plateau à 75 dB, on cherchera une fréquence de résonance en fonction de la courbe du haut-parleur 4 pour que cette fréquence soit aux environs de 60 Hz par exemple. Sur le graphe de la figure 3 est tracée la courbe de puissance acoustique II correspondant à une enceinte close : on peut voir que les courbes I et II sont similaires dans la plage de fréquences utile.

Avantageusement, le haut-parleur 4 est relié à un organe de filtrage 10 agencé pour atténuer le pic de puissance acoustique 1.2 à la fréquence de résonance. L'organe de filtrage 10 est un filtre réjecteur de bande ou coupe bande. Ceci permet de rapprocher encore la courbe I de la courbe II hors de la plage de fréquences utile. La structure d'un tel filtre étant bien connue, elle ne sera pas plus décrite ici.

Bien entendu, l'invention n'est pas limitée aux modes de réalisations décrits mais englobe toute variante entrant dans le champ de l'invention telle que définie par les revendications.

En particulier, le boîtier peut avoir une autre forme, comporter un plus grand nombre d'ouvertures d'aération et les ouvertures peuvent être disposées différemment...

Le dispositif peut comprendre deux ou plus de deux haut-parleurs.

## Revendications

1. Dispositif électronique comprenant un boîtier qui définit un volume interne dont une partie seulement est occupée par des composants électroniques et qui est pourvu d'au moins deux ouvertures d'aération en deux portions du boîtier écartées l'une de l'autre pour permettre une circulation d'air dans le volume interne entre ces deux ouvertures, les composants électroniques comportant au moins un haut-parleur qui a une plage de fréquences utile et qui est monté dans le volume interne en regard d'au moins une ouverture de diffusion ménagée dans le boîtier, **caractérisé en ce que** chaque ouverture d'aération est reliée au volume interne par un canal en chicane ayant une longueur adaptée pour former un résonateur de Helmholtz ayant une fréquence de résonance située hors de la plage de fréquences utile du haut-parleur.

2. Dispositif selon la revendication 1, dans lequel le haut parleur est relié à un organe de filtrage agencé pour atténuer un pic de puissance acoustique à la fréquence de résonance.

3. Dispositif selon la revendication 2, dans lequel l'organe de filtrage est un filtre réjecteur de bande.

4. Dispositif selon la revendication 1, dans lequel le boîtier comprend au moins deux parois latérales opposées l'une à l'autre et sensiblement planes dans lesquelles sont ménagées les ouvertures d'aération, les canaux s'étendant chacun le long d'une des parois latérales.

## Patentansprüche

1. Elektronische Vorrichtung, umfassend ein Gehäuse, das ein Innenvolumen definiert, von dem nur ein Teil von elektronischen Bauelementen eingenommen ist, und das mit mindestens zwei Lüftungsöffnungen in zwei Abschnitten des Gehäuses versehen ist, die zueinander beabstandet sind, um eine Luftzirkulation in dem Innenvolumen zwischen diesen beiden Öffnungen zu gestatten, wobei die elektronischen Bauelemente mindestens einen Lautsprecher umfassen, der einen Nutzfrequenzbereich hat und der in dem Innenvolumen gegenüber mindestens einer in dem Gehäuse ausgebildeten Diffusionsöffnung angebracht ist, **dadurch gekennzeichnet, dass** jede Lüftungsöffnung mit dem Innenvolumen über einen Zickzackkanal verbunden ist, der eine Länge hat, die dazu geeignet ist, einen Helmholtz-Resonator zu bilden, der eine Resonanzfrequenz hat, die außerhalb des Nutzfrequenzbereichs des Lautsprechers liegt.

2. Vorrichtung nach Anspruch 1, wobei der Lautsprecher mit einem Filterorgan verbunden ist, das so ausgebildet ist, dass es eine akustische Leistungsspitze bei der Resonanzfrequenz dämpft.

3. Vorrichtung nach Anspruch 2, wobei das Filterorgan ein Bandsperrfilter ist.

4. Vorrichtung nach Anspruch 1, wobei das Gehäuse mindestens zwei einander gegenüberliegende und im Wesentlichen ebene Seitenwände umfasst, in denen die Lüftungsöffnungen ausgebildet sind, wobei sich die Kanäle jeweils entlang einer der Seitenwände erstrecken.

## Claims

1. Electronic apparatus comprising a casing that defines an inside volume that is occupied in part only by electronic components and that is provided with at least two ventilation openings in two portions of the casing that are spaced apart from each other in order to allow air to flow in the inside volume between these two openings, the electronic components including at least one loudspeaker that has a working frequency range and that is mounted in the inside volume facing at least one outlet opening arranged in the casing, the apparatus being **characterized in that** each ventilation opening is connected to the inside volume via a baffle channel having a length adapted to form a Helmholtz resonator having a resonant frequency situated outside the working frequency range of the loudspeaker.

2. Apparatus according to claim 1, wherein the loudspeaker is connected to a filter member arranged to attenuate an acoustic power peak at the resonant frequency.

3. Apparatus according to claim 2, wherein the filter member is a band-stop filter.

4. Apparatus according to claim 1, wherein the housing comprises at least two side walls that are opposite each other, substantially plane, and having the ventilation openings formed therein, each of the channels extending along one of the side walls.
